# EUROPEAN PATENT APPLICATION

(11) **EP 4 787 643 A1**
(43) Date of publication of application: **05.08.2026**
(21) Application number: 26154920.8
(22) Date of filing: 29.01.2026
(51) Int. Cl.: H02G 1/14, H01B 3/44, H02G 15/196, H02G 15/18

(54) **PROCESS FOR PREPARING A JOINT BETWEEN POWER CABLES**

(30) Priority: 03.02.2025 NO 20250123
(71) Applicant: Nexans, 92400 Courbevoie (FR)
(72) Inventor: JOHANSSON, Mats, 45290 Strömstad (SE); JACOBSEN, Brynjar, 1784 Halden (NO); GRØNBERG, Pål, 1776 Halden (NO); NYSETH, Ole Herman, 1788 Halden (NO)
(74) Representative: Acapo Onsagers AS

(57) **Abstract**

The present invention relates to a process for preparing a joint between two electric high voltage power cables. Further, the present invention relates to a flexible vulcanized joint between two power cables as well as to a joined power cable.

## Description

### Field of the invention

The present invention relates to a process for preparing a joint between two electric high voltage power cables. Further, the present invention relates to a flexible vulcanized joint between two power cables as well as to a joined power cable.

### Background

Power cables for intermediate to high voltage and current capacities have typically one or more electric conductors at their core followed by electrical insulation and shielding of the conductors. The electrical insulation and shielding typically comprises an inner screen comprising a semiconductive layer, a polymeric insulator comprising an electrical insulation layer and an outer sheathing comprising a semiconductive layer. The metal conductors of power cables are typically made of either aluminium or copper. The metal conductor may either be a single strand surrounded by electric insulation, or a number of strands arranged into a bunt surrounded by electric insulation.

When combining two of such electric high voltage power cables it requires that the metal conductor is joined together, in particular welded and/or by mechanical connection, followed by surrounding the metal conductor with the electrical insulation system. In order to result in electric high voltage power cables exhibiting superior electrical and mechanical performance and durability, it requires that the individual layers have a uniform structure and constitution along the length of the electric high voltage power cable. In particular, the polymeric insulating layer should have the same or at least a similar structure and constitution no matter if the polymeric insulating layer is regarded at the joint or along the conventionally manufactured electric high voltage power cable.

Several solutions for insulation systems for jointing high voltage cables are known, but all have various disadvantages that should be overcome. One such problem when integrating thermoplastic polymeric material in the insulation system of the joint is that the traditional lapping method may not be viable anymore since the lack of cross-linking will allow material deformation during the melting procedure. An alternative is to use a direct injection moulding procedure. However, this procedure requires highly specialized equipment and the jointing needs to be performed in two steps in order to account for density/volume change in the material.

When arranging the non-vulcanized isolation material around the metal conductor and subsequently performing vulcanization, it was found that the oxygen is air trapped inside non-vulcanized isolation material which reacts with peroxides, thus causing by-products. For reducing the amount of oxygen, it is known to apply a process step of flushing the space around the joint with an inert gas to remove the oxygen in contact with the non-vulcanized isolation material before vulcanization.

However, it was found that joints of electric high voltage power cables still give rise to electrical or mechanical durability problems especially in long term. Leakages and thermal runaways are often found at the site of joints.

As a further ongoing challenge, the time of manufacturing factory joints is still long as it takes several days.

The goal of the present invention is to provide a new and advantageous process of joining two electrical high voltage power cables. In particular, the goal of the present invention refers to the provision of a process for manufacturing an electrical high voltage power cable and the provision of a power cable showing an improved electrical and mechanical durability at the site of the cable joints. Further, the time of manufacturing factory joints should be reduced.

### SUMMARY OF THE INVENTION

The present invention is defined by the appended claims and in the following:
In a first aspect, the invention relates to a process for preparing a joint between two electric power high voltage cables obtaining the joint between an end of a first electric high voltage power cable with an end of a second electric high voltage power cable, wherein electric high voltage power cables each comprise a metal conductor and an electrical insulation layer surrounding the metal conductor, wherein the electrical insulation layer comprises a cross-linked polymeric composition, wherein the process comprises the following steps:
- providing two electric high voltage power cables and exposing the metal conductor at an end portion of the first electric high voltage power cable and exposing the metal conductor at an end portion of the second electric high voltage power cable;
- joining the exposed metal conductor of the first electric high voltage power cable with the exposed metal conductor of the second electric high voltage power cable to form a joined metal conductor;
- providing a blend comprising a non-cross-linked polymer and a cross-linker, and arranging the blend in a spatial part surrounding the joined metal conductor;
- applying a vacuum to the spatial part;
- vulcanizing the blend by heating.

Electric high voltage power cables can typically be joined using various methods. For land cables, prefabricated joints are commonly used; these are pre-molded devices that connect the cable ends. Submarine cables, on the other hand, are typically joined using sea joints, also known as factory joints.

According to the present invention, a joint is obtained from this process, preferably a factory joint is obtained. To create such a joint, the conductor ends are first stripped of all external layers, usually by tapering down the cable insulation to form a conical shape with the exposed conductor at the electric high voltage power cable's end portion. Thus, one step of the process refers to providing two electric high voltage power cables and exposing the metal conductor at an end portion of the first electric high voltage power cable and exposing the metal conductor at an end portion of the second electric high voltage power cable. The two electric high voltage power cables to be connected can be identical in all aspects except for their length. This means they share the same conductor metal, conductor structure, conductor diameter, insulation system, insulation thickness, and so on. However, it might be that the two electric high voltage power cables distinguish from one another, e.g. they may distinguish from one another by the layers radially outside the insulation system.

The conductors are then electrically and mechanically connected, preferably through welding, soldering, brazing, or by making use of a mechanical connector. Thus, one step of the process refers to joining the exposed metal conductor of the first electric high voltage power cable with the exposed metal conductor of the second electric high voltage power cable to form a joined metal conductor
Next, the electrical insulation system is restored in stages. The inner semi-conducting layer - if present - can be rebuilt by lapping an extruded semi-conducting tape around the conductor, followed by melting and vulcanizing. The insulation layer is then arranged around the metal conductor or - if present - inner semi-conducting layer, again followed by melting and vulcanizing. Finally, the outer semi-conducting layer - if present - is restored by lapping an extruded semi-conducting tape around the insulation layer, followed by melting and vulcanizing.

The goal is to reconstruct the electric high voltage power cable within the joint, layer by layer, to fully restore its original structure. However, each layer of the joint may chemically distinguish from the corresponding layer of one or both of the two electric high voltage power cables, i.e. the insulation layer may chemically distinguish from the insulation layer of one or both of the two electrical power cables.

According to the invention, the steps of "providing a blend comprising a non-cross-linked polymer and a cross-linker, and arranging the blend in a spatial part surrounding the joined metal conductor" in its most general meaning, i.e. as comprised by the independent claim, aims at the obtaining of the insulating layer, i.e. at obtaining of the insulating layer at the end portions of the two electric high voltage power cables to be joined. It is not compulsory required that the insulating material is applied immediately on the metal conductor. According to one aspect, the power cable may comprise an inner semiconductive layer (see below). This means that the process according to the invention may comprise further steps, especially further intermediate steps.

The term "arranging the blend in a spatial part surrounding the joined metal conductor" is preferably understood as follows: The void left after having exposed the end portions of the electric high voltage power cables is refilled with the material/layer being stripped when exposing the end portions of the electric high voltage power cables. It refers to the goal to reconstruct the electric high voltage power cable in its original structure. Practical obstacles may however possibly hinder to ideally reconstruct the electric high voltage power cables in its original structure. The arranging of the blend may be any way of how to arrange the blend. In practice, the blend is wrapped or lapped the joined metal conductor, such that the void left from the exposing of the end portions is reconstructed. The term "lapping" is understood as wrapping the blend such that a part of the tape consisting of the blend is overlapping with the tape of the foregoing turn when wrapping.

The term "spatial part" means, according to the invention, a room surrounding the metal conductor which is to be filled with the layers such that layers in its original structure is restored as best as possible. It becomes evident for a skilled person as to what is the spatial part to be filled such that the original structure of the electric high voltage power cable is restored. Practical obstacles may possibly hinder to ideally reconstruct the original structure of the electrical power cable.

In one aspect, the "spatial part surrounding the joint metal" means at least the room surrounding the metal conductor, which length of the room along the longitudinal direction of the metal conductor at least equals the length of the exposed metal conductor and the metal conductor joint, wherein the thickness of the room surrounding the joint meal is about equal to the electrical insulator.

An essential step of the present invention relates to applying a vacuum to the spatial part. It means that the vacuum is applied *at least* to the spatial part, where the blend is arranged.

In practice, the vacuum is applied via a rigid sleeve put over the electric high voltage power cable. The left and right ends of the rigid sleeve are fixed to a surface (not necessarily the outermost surface) of the electric high voltage power cable in an air-tight manner.

Applying vacuum as an essential step of the process offers several benefits. The blend is fully situated in the spatial part which is subjected to the application of the vacuum. It prevents the dehydration of cross-linking by-products into water, a common issue in prior art methods. As a result, the insulation in the joint produced by this method contains almost no water. This absence of water leads to lower conductivity and reduced leakage current at a given voltage compared to conventional joints. Consequently, the obtained joints have a stable chemical composition in their insulation system, minimizing the risk of failure.

The low water content and conductivity allow the joint to operate at higher conductor temperatures and voltage levels. Additionally, eliminating water formation in the insulation system reduces the time required for manufacturing the joint. By lapping the joint insulation tape in an oxygen- and water-free atmosphere, oxidation of the exposed surfaces of the cable insulation system is avoided, resulting in improved bonding between the joint and cable insulation systems.

State of the art solutions suggest processes where the air is solely flushed with an inert gas. However, it was figured out that the application of vacuum results in beneficial effect. The vacuum is associated with a significant improvement compared to electric high voltage power cables being prepared by flushing or degassing (without application of vacuum) the air.

In one aspect, the process finishes with the step of obtaining a flexible vulcanized joint and a joined electric power cable.

In one aspect, the step of vulcanizing is performed by heating under pressure. The pressure is applied mechanically. The application of pressure by mechanical means is understood such that a solid is pressed on the surface of the blend. In practice, a sleeve is used which exerts force onto the surface of the blend. The sleeve is made permeable for gases such that pressure can be exerted and still vacuum is applied. The permeability can be achieved either by using a permeable material for the sleeve or by leaving voids through which the volatile substances may disappear.

The terms "vulcanizing" or "vulcanization" is to be understood in its broadest possible sense. The historical meaning of vulcanization is the cross-linking of thermoplastic polymers via sulfur. In the framework of the present application, the step of vulcanizing is extended to cross-linking with cross-linkers other than sulfur without excluding sulfur, however. In one aspect, the step of vulcanizing represents a cross-linking of thermoplastic polymers with a cross-linker to obtain a cross-linked polymer network which cross-linked polymer network is preferably at least partially non-crystalline, wherein the step of vulcanizing is performed by heat or the combination of heat and pressure mechanically exerted. In practice, this is performed by surrounding the blend with a hose and applying gas pressure via the hose. The partially non-crystalline structure of the network ensures the elastomeric properties of the obtained material. In a preferred aspect, the obtained material has elastomeric properties. The material obtained after the step of vulcanizing is predominantly non-crystalline. Thus, the step of vulcanizing is preferably understood as rendering the blend to be an elastomeric thermoset material. A skilled person is aware of methods of determining the crystallinity of a thermoset material, e.g. DSC measurement.

In one aspect, the steps of applying the vacuum and vulcanizing the blend may be at least partly performed simultaneously.

In one aspect, the step of applying the vacuum is started after the step of arranging the blend in the spatial part surrounding the joined metal conductor. However, it is possible in an alternative aspect that the step of applying the vacuum is started before the step of arranging the blend in the spatial part surrounding the joined metal conductor. In that case, the arrangement rather refers to a step of shaping and molding in the spatial part.

Before the vulcanization is started, the vacuum is preferably applied. According to this preferred embodiment, the step of applying the vacuum is applied further after the step of arranging the blend. This step of further applying the vacuum during vulcanization is not necessarily performed until the end of the step of vulcanization. Thus, the step of applying the vacuum and vulcanizing the blend is performed at least partly simultaneously. When the vulcanization is initiated and the vacuum is applied, the pressure increases due to formation of lower molecular weight species, i.e. volatile substances. It is preferred that the application of vacuum is performed throughout the vulcanization step. However, it is also possible to stop applying vacuum and flushing the spatial part with a dry inert gas.

Without being bound to a theory, the combination of the steps of applying vacuum and vulcanizing the blend is beneficial due to the removal of residues evolving during the process for preparing a joint.

Without being bound to a theory, the beneficial effect associated with the application of vacuum in the process of this invention could potentially be based on the following circumstances:
During thermal processing in the manufacture of cross-linked polyethylene (XLPE) power cables, such as during extrusion, crosslinking, or jointing procedures, the insulation is exposed to elevated temperatures that initiate chemical reactions within the polymer matrix. A known decomposition product of the dicumyl peroxide (DCP) crosslinking agent is cumyl alcohol. When the XLPE insulation is heated, this cumyl alcohol undergoes dehydration, generating water within the polymer structure. The amount of water formed increases significantly with rising temperature. The study shows that the presence of oxygen in the surrounding atmosphere substantially accelerates this dehydration reaction. When XLPE specimens are heated in air, considerably more water is produced than when heating is carried out in a nitrogen atmosphere. This demonstrates that oxygen promotes the chemical pathways leading to water generation, resulting in higher internal moisture levels within the polymer.

The water generated during the heating phase may initially remain dissolved or highly dispersed within the softened polymer. Microvoids barely form at this stage because the polymer is still in a thermally expanded, low-viscosity condition in which moisture remains accommodated within the material. However, as the XLPE insulation subsequently cools, the solubility of water in the polymer matrix decreases. When the temperature falls below the boiling point of water, the polymer becomes supersaturated with respect to water, and the excess moisture condenses into microscopic droplets within the solidifying material. As cooling progresses further, the polymer crystallizes and the condensed droplets become trapped. These droplets then transform into stable microvoids because the solidifying polymer matrix prevents their re-absorption or diffusion out of the material.

The density of the resulting microvoids correlates with the amount of water generated during the heating phase. Once the moisture content exceeds a critical threshold the density of microvoids increases. Since oxygen substantially increases water generation relative to inert atmospheres, specimens exposed to oxygen during heat treatment exhibit significantly higher microvoid densities. Thus, oxygen does not create microvoids directly but enhances the formation of water vapor, which in turn drives the condensation-induced void formation during cooling.

Accordingly, vapor and oxygen contribute to microvoid formation in XLPE insulation because oxygen accelerates the production of water during heating, and the resulting water vapor condenses into droplets during subsequent cooling. These droplets become permanently entrapped as the polymer crystallizes, producing microvoids within the insulation. This mechanism explains why processing environments containing oxygen and why elevated moisture levels during heat treatment must be carefully controlled to prevent microvoid generation in XLPE power cables.

It is emphasized that even if knowing these circumstances, it does not immediately reveal the consequences on the manufacturing processes. Even less, it is not apparent if and if yes, what measures are to be taken to improve or accelerate the preparation of power cable joints. Such measures appear evident only in hindsight. The actual technical effects associated with the measures taken for achieving beneficial effect are revealed from the examples below.

The step of applying vacuum may have several beneficial forms: It is particularly preferred that the steps of applying the vacuum and exerting pressure are at least partly performed simultaneously. This becomes achievable by exerting pressure mechanically, e.g. by pressing a gas permeable sleeve onto the surface of the blend foreseen to be subjected to vulcanization, as described above. Therefore, according to a particularly preferred aspect of the invention, the step of vulcanizing the blend is performed by heating under pressure exerted mechanically, wherein the steps of applying the vacuum and exerting pressure by mechanically pressing the blend is at least partly performed simultaneously.

In one aspect, the process comprises further the step of flushing the spatial part with a dry inert gas after the step of applying the vacuum to the spatial part; or wherein the process comprises further the steps of flushing the spatial part with a dry inert gas after the step of applying the vacuum to the spatial part and repeatedly applying the vacuum to the spatial part. These cycles of applying the vacuum and flushing with the dry inert gas can be performed two to five times.

When the spatial part is flushed with the dry inert gas after the step of applying the vacuum, residues of water molecules and low molecular weight species are diluted in the dry inert gas. When vacuum is again applied the reduction in water and low molecular weight species is improved compared to a process where vacuum is applied only once. The loop of flushing with dry inert gas and applying vacuum can be performed once, two times or even more often.

In one aspect, the pressure within the spatial part amounts to more than 0 mbar and less than 1 mbar, preferably less than 0.25 mbar, more preferred less than 0.1 mbar, most preferred 0.01 mbar during the step of applying the vacuum.

The step of applying a vacuum can have a duration of 1 hour to 1 week, preferably 6 hour to 72 hours, more preferred 12 hours to 24 hour.

In one aspect, the process further comprises a step of degassing performed after the step of vulcanizing, wherein preferably the step of degassing is performed at elevated temperature and/or by flushing with air.

The term "degassing" is understood as known by a skilled person, i.e. by flushing with a gas. In doing so, constituents being generated during the vulcanization diffuse out of the vulcanized material. In order to accelerate this process, the step of degassing is preferably performed at elevated temperature. Flushing with air is the cheapest way of doing it. Further, air has of course the best availability.

In one aspect, the step of degassing can be performed after the step of applying vacuum. In one aspect, the step of applying vacuum is performed for a duration of 1 hour to 24 hours, preferably 12 hours, followed by the step of degassing for a duration of 12 hours to 48 hours. The combination of applying vacuum followed by degassing increases the technical effect associated with the omission of volatile substances from the cable material. The combination is associated with the most beneficial solution regarding accelerated production and efficient removal of volatile substances.

In one aspect, the steps of providing a blend comprising a non-cross-linked polymer and a cross-linker, and arranging the blend in a spatial part surrounding the joined metal conductor may be performed by providing a tape consisting of the blend and lapping the tape surrounding the joined metal conductor, wherein the step of lapping the tape surrounding the joined metal conductor is preferably performed under clean room conditions.

The term "clean room conditions" is understood as providing an atmosphere having a reduced number of particles per cubic meter compared to outside the space of applied clean room conditions, preferably less than 352,000 particles per cubic meter, preferably less than 100.000 particles per cubic meter (i.e. ISO class 5 cleanliness).

In one aspect, the non-cross-linked polymer may comprise a polyolefin, preferably wherein the non-cross-linked polymer may be selected from the group consisting of polyethylene, polypropylene, EPDM rubber or EPM rubber, most preferred LDPE polyethylene; and/or the cross-linker may comprise an organic peroxide, preferably wherein the cross-linker may be selected from the group consisting of dicumyl peroxide, bis(t-butylperoxyisopropyl)benzene, i-butyl cumyl peroxide, 2,5-di(t-butylperoxy)-2,5- dimethylhexane, n-butyl-4,4'-di(t-butylperoxy)valerate, 1,1'-di(t-butylperoxy)-3,3,5- trimethylcyclohexane, or mixtures thereof, preferably dicumyl peroxide.

These cross-linkers have the highest efficiency in cross-linking combined with a favorable availability. In one aspect, the amount of the cross-linker in the respective layers, i.e. the inner semiconductive layer, the insulation layer, and/or the outer semiconductive layer, can be from 0.05 to 3.0 wt.%, preferably 0.1-2.0 wt.%, more preferred 0.5 to 1 wt.%, based on the weight of the non-cross-linked layer, to ensure sufficient cross-linking. It is known that polar chemicals, such as water and cross-linking by-products, affect the conductivity in the insulation polymeric materials. Thus, there is a desire to limit the amount of such chemicals in the insulation system of the power cables.

In one aspect, the two electric high voltage power cables each further comprise an inner semiconductive layer between the metal conductor and the electrical insulation layer, which inner semiconductive layer surrounds the metal conductor, wherein the process may further comprise the steps of providing a second blend comprising a second non-cross-linked polymer, a second cross-linker and carbon black, arranging the second blend surrounding the joined metal conductor by lapping a tape consisting of the second blend surrounding the joined metal conductor, and vulcanizing the second blend by heating, wherein preferably these steps are performed under clean room conditions, and/or wherein preferably these steps are performed without applying vacuum.

The second non-cross-linked polymer can be of the same type as the non-cross-linked polymer. Also, the second cross-linker can be of the same type as the cross-linker.

These further steps aim at manufacturing the inner semiconductive layer. These steps thus result in obtaining the inner semiconductive layer surrounding the metal conductor at the end portions. It was surprisingly found that the step of applying vacuum does not have such a crucial impact on the performance of the inner semiconductive layer.

In one aspect, the two electric high voltage power cables may each further comprise an outer semiconductive layer attached to the electrical insulation layer and surrounding the electrical insulation layer, wherein the process may further comprise the steps of providing a third blend comprising a third non-cross-linked polymer, a third cross-linker and carbon black, arranging the third blend surrounding the electrical insulation layer by lapping a tape consisting of the third blend surrounding the electrical insulation layer, and vulcanizing the third blend by heating, wherein preferably these steps are performed under clean room conditions, and/or wherein preferably these steps are performed without applying vacuum.

The third non-cross-linked polymer can be of the same type as the non-cross-linked polymer or the second non-cross-linked polymer. As well, the third cross-linker can be of the same type as the cross-linker or the second cross-linker.

These further steps aim at manufacturing the outer semiconductive layer. These steps thus result in obtaining the outer semiconductive layer surrounding the electrical insulating layer obtained in forgoing steps. It was surprisingly found that the step of applying vacuum does not have such a crucial impact on the performance of the outer semiconductive layer.

Throughout the present application, the term non-cross-linked polymer is alternatively understood as first non-cross-linked polymer and the term cross-linker is alternatively understood as first cross-linker.

In one aspect, the two electric high voltage power cables may each further comprise an outermost shielding layer, wherein the process may further comprise the application of the outermost shielding layer surrounding the electrical insulation layer at the end portions.

In general, the electric high voltage power cable may comprise further layers. Such further layers are beneficial but not crucial for solving the invention's underlaying problems.

The invention's underlying problems are further solved by the subject-matter of claim 11. A second aspect of the invention therefore relates to a flexible vulcanized joint characterized in that the flexible vulcanized joint is prepared by any one of the processes according to the invention.

In one aspect, the total concentration of α-methyl styrene in the flexible vulcanized joint measured in wt.-% may be lower compared to the total concentration of α-methyl styrene in the flexible vulcanized joint measured in wt.-% when the step of applying vacuum is not performed.

The invention's underlying problems are further solved by the subject-matter of claim 13. A third aspect of the invention therefore relates to a joined electric high voltage power cable comprising the flexible vulcanized joint according to the second aspect of the invention.

Features being solely disclosed in connection with the process of the invention are deemed to be disclosed in connection with the flexible vulcanized joint of the invention or the joined electric high voltage power cable according to the invention and vice versa.

### Short description of the drawings

In the following description this invention will be further explained by way of exemplary embodiments shown in the drawings:
Fig. 1 shows two electric high voltage power cables in a side view,
Fig. 2 shows a cross-section of the partially manufactured joined electric high voltage power cable,
Fig. 3 shows the average moisture content measured depending on implementation of method step of applying vacuum, and
Fig. 4 shows the alpha methyl styrene content in the layers of the power cable from the inside to the outside depending on implementation of method step of applying vacuum.

### Description of the invention

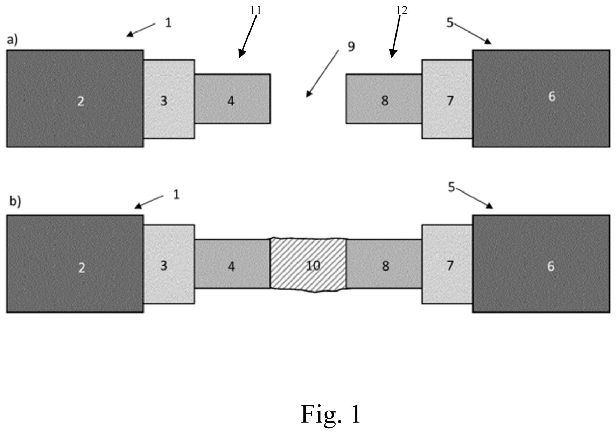

Figure 1 shows two electric high voltage power cables 1, 5 before being joined Figure 1a in a cross-sectional side view. Electric high voltage power cables 1, 5 of this kind are intended for transmitting electric power. Often, it is desirable to transmit power over long distances. Although it is possible to produce continuous cables in lengths of more than 20 km in a single extrusion run, transferring power over long distances still requires that separate cable lengths be joined together.

The electric high voltage power cables 1, 5 to be joined are single-phase types having a single-core as in Figure 1 or maybe triple-core cables. Such electric high voltage power cables may be either underwater or land cables. Preferably, these are power transmission cables with a rated voltage of 50 kV or higher, making them suitable for high voltage transmission. HVDC cables are particularly preferred. However, this invention also allows for the joining of alternating current (AC) cables, including high voltage AC, medium voltage AC, and low voltage AC cables. The AC cables can be either single-core or triple-core.

The electric high voltage power cables 1, 5 to be connected comprises a metal conductor 4, 8, typically made of metals like copper or aluminum. This metal conductor 4, 8 can be stranded, segmental, or have keystone-shaped profiles. It is encased in an electrical insulation system that includes an inner semi-conducting layer, an insulation layer, and an outer semi-conducting layer, with the insulation layer positioned between the semi-conducting layers. Single-phase cables contain one conductor.

Figure 1a) show a first high voltage power cable 1 comprising an armouring (not explicitly shown) and outer sheath 2 and an electrical shield and insulation 3 and a metal conductor 4, and similarly for a second high voltage power cable 5 comprising an armouring and outer sheath 6 and an electrical shield and insulation 7 and a metal conductor 8. Parts of the armouring and outer sheath 2, 6 and the electrical shield and insulation 3, 7 are removed at one end of the high voltage power cables 1, 5 to expose an end section of the metal conductor 4, 8 providing end portions 11, 12 of the first electric high voltage cable. The high voltage power cables 1, 5 are arranged to have the metal conductors 4, 8 aligned and opposite each other.

In Figure 1b), the space/gap 9 between the metal conductor strands 4, 8 is filled with a metal conductor joint 10 as e.g. a solid state additive manufactured element made of a metal, preferably the same metal as the metal conductors 4, 8. As described above, there are different ways of how to connect the metal parts of the power cable.

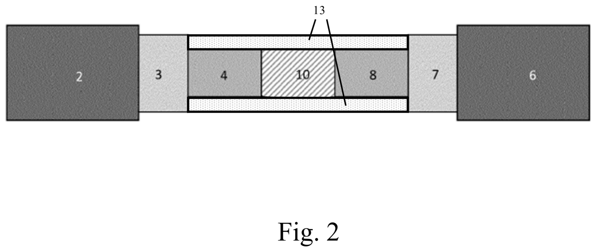

In Figure 2, the spatial part 13 is shown. Of course, the spatial part surrounds the end portions 11, 12 and the metal conductor joint 10. The spatial part 13 is provided with insulation 3, 7. The individual parts of the insulation 3, 7 are not shown in Figures 1 and 2. In practice, a tape surrounds the joined metal conductor 4, 8, 10 which application of the tape is performed by wrapping or lapping the tape under clean room conditions. On top of the tape, the inner semiconductive layer is applied, thereafter the electrical insulation layer is applied, and thereafter the outer semiconductive layer is applied. Altogether, the insulation 3, 7 is built by these layers. The insulation 3, 7 is then provided with intermediate layers, armouring layers and the outer sheath layer 2, 6.

A person skilled in the art will appreciate that the Figures illustrate example embodiments, only, and that the specific setup may distinguish from the above example embodiments. This holds true for the setup surrounding the insulation, in particular.

In a first set of examples, the average moisture content is measured firstly in a cable produced by a conventional production method; and secondly in a cable produced by a method according to the invention, i.e. by a method making use of the method step of applying vacuum.

The moisture content can be measured by performing a differential scanning calorimetry (DSC). The method is a conventional method measuring a weight loss parameter which is to a sufficient extend independent from the measurement equipment.

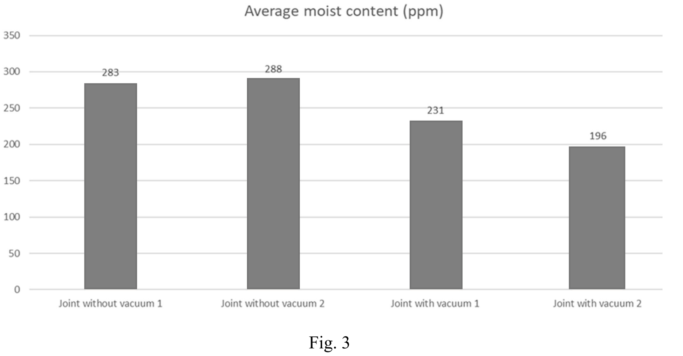

In Figure 3, the two distinguishing sets of examples show the result, i.e. the average moisture content of a power cable joint manufactured under conventional circumstances, i.e. without applying vacuum during manufacturing of the power cable joint. The content of water amounts to 285 ppm on average. Two further examples show the content of water when method according to the invention has been applied. On average, the amount of average moisture content can be reduced to 213 ppm on average. That is a significant drop in the moisture content measured in the power cable.

An important fact relates to the circumstances that the moisture content is a representative species for a low molecular weight compound. With the reduction of the moisture content, the content of oxygen is reduced as well. As outlined in the above description, the oxygen content plays a crucial role in the formation of microvoids being detrimental for the stability of the power cable. While for instance the application of heat results in a reduction of moisture, the application of vacuum reduces the content of water and the content of oxygen. This improves the stability and durability of the produced power cable.

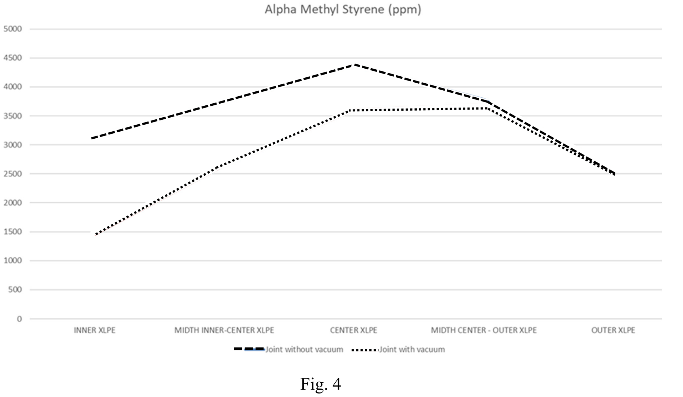

Figure 4 provides a more distinct view on the effect caused by the method step of applying vacuum in the method of producing a power cable joint. Figure 4 shows the content of alpha-methyl styrene depending on the layer of the power cable. Alpha-methyl styrene evolves during the chemical reaction of curing the XPLE. During this reaction both water and alpha methyl styrene (AMS) are generated in equal molar amount. The graph shown in Figure 4 shows content from inner part to outer part starting with the inner XLPE, midth inner-center XLPE, center XLPE, midth center-outer XLPE, outer XLPE. As can clearly be seen from Figure 4, the content of alpha-methyl styrene is significantly lower in the inner part of the insulation layer of the cable. As for the process taking place in the power cable during the reaction, reference is made to the above description.

Since the inner part of the cable has the highest electrical stress, the application of vacuum during the process of manufacturing the power cable exerts the effect of release of low molecular weight species for that part of the power cable which is prone to the highest stress. This has an immediate beneficial effect on the lifetime of the cable. The method of the present invention produces joints being superior to those produced under conventional processes.

### REFERENCE LIST

- 1: First electric high voltage power cable
- 2: Outer sheath of the first electric high voltage power cable
- 3: Insulation of the first electric high voltage power cable
- 4: Metal conductor of the first electric high voltage cable
- 5: Second electric high voltage power cable
- 6: Outer sheath of the second electric high voltage power cable
- 7: Insulation of the second electric high voltage power cable
- 8: Metal conductor of the second electric high voltage cable
- 9: Gap between the two conductors
- 10: Metal conductor joint
- 11: End portion of the first electric high voltage cable
- 12: End portion of the first electric high voltage cable
- 13: Spatial part

## Claims

1. A process for preparing a joint between two electric high voltage power cables (1, 5) obtaining the joint between an end of a first electric high voltage power cable (1) with an end of a second electric high voltage power cable (5), wherein electric high voltage power cables (1, 5) each comprise a metal conductor (4, 8) and an electrical insulation layer (3, 7) surrounding the metal conductor (4, 8), wherein the electrical insulation layer (3, 7) comprises a cross-linked polymeric composition, wherein the process comprises the following steps:
• providing two electric high voltage power cables (1, 5) and exposing the metal conductor (4) at an end portion (11) of the first electric high voltage power cable (1) and exposing the metal conductor (8) at an end portion (12) of the second electric high voltage power cable (5);
• joining the exposed metal conductor of the first electric high voltage power cable (1) with the exposed metal conductor of the second electric high voltage power cable (5) to form a joined metal conductor;
• providing a blend comprising a non-cross-linked polymer and a cross-linker, and arranging the blend in a spatial part (13) surrounding the joined metal conductor (4, 8, 10);
• applying a vacuum to the spatial part (13);
• vulcanizing the blend by heating.

2. The process according to claim 1, wherein the step of vulcanizing is performed by heating under pressure.

3. The process according to claim 1, wherein the steps of applying the vacuum and vulcanizing the blend are at least partly performed simultaneously.

4. The process according to any one of claims 1 to 3, wherein the process comprises further the step of flushing the spatial part (13) with a dry inert gas after the step of applying the vacuum to the spatial part (13); or wherein the process comprises further the steps of flushing the spatial part (13) with a dry inert gas after the step of applying the vacuum to the spatial part (13) and repeatedly applying the vacuum to the spatial part (13).

5. The process according to any one of claims 1 to 4, wherein the pressure within the spatial part (13) amounts to more than 0 mbar and less than 1 mbar, preferably less than 0.25 mbar, more preferred less than 0.1 mbar, most preferred 0.01 mbar during the step of applying the vacuum.

6. The process according to any one of claims 1 to 5, wherein the process further comprises a step of degassing performed after the step of vulcanizing, wherein preferably the step of degassing is performed at elevated temperature and/or by flushing with air.

7. The process according to any one of claims 1 to 6, wherein the steps of providing a blend comprising a non-cross-linked polymer and a cross-linker, and arranging the blend in a spatial part (13) surrounding the joined metal conductor (4, 8, 10) is performed by providing a tape consisting of the blend and lapping the tape surrounding the joined metal conductor (4, 8, 10), wherein the step of lapping the tape surrounding the joined metal conductor (4, 8, 10) is preferably performed under clean room conditions.

8. The process according to any one of claims 1 to 7, wherein the non-cross-linked polymer comprises a polyolefin, preferably wherein the non-cross-linked polymer is a selected from the group consisting of polyethylene, polypropylene, EPDM rubber or EPM rubber, most preferred LDPE polyethylene; and/or the cross-linker comprises an organic peroxide, preferably wherein the cross-linker is selected from the group consisting of dicumyl peroxide, bis(t-butylperoxyisopropyl)benzene, i-butyl cumyl peroxide, 2,5-di(t-butylperoxy)-2,5- dimethylhexane, n-butyl-4,4'-di(t-butylperoxy)valerate, 1,1'-di(t-butylperoxy)-3,3,5-trimethylcyclohexane, or mixtures thereof, preferably dicumyl peroxide.

9. The process according to any one of claims 1 to 8, wherein the two electric high voltage power cables (1, 5) each further comprise an inner semiconductive layer between the metal conductor (4, 8) and the electrical insulation layer (3, 7), which inner semiconductive layer surrounds the metal conductor (4, 8), wherein the process further comprises the steps of providing a second blend comprising a second non-cross-linked polymer, a second cross-linker and carbon black, arranging the second blend surrounding the joined metal conductor (4, 8, 10) by lapping a tape consisting of the second blend surrounding the joined metal conductor (4, 8, 10), and vulcanizing the second blend by heating, wherein preferably these steps are performed under clean room conditions, and/or wherein preferably these steps are performed without applying vacuum.

10. The process according to any one of claims 1 to 9, wherein the two electric high voltage power cables (1, 5) each further comprise an outer semiconductive layer attached to the electrical insulation layer (3, 7) and surrounding the electrical insulation layer (3, 7), wherein the process further comprises the steps of providing a third blend comprising a third non-cross-linked polymer, a third cross-linker and carbon black, arranging the third blend surrounding the electrical insulation layer (3, 7) by lapping a tape consisting of the third blend surrounding the electrical insulation layer (3, 7), and vulcanizing the third blend by heating, wherein preferably these steps are performed under clean room conditions, and/or wherein preferably these steps are performed without applying vacuum.

11. The process according to any one of claims 1 to 10, wherein the two electric high voltage power cables (1, 5) each further comprise an outermost shielding layer (2, 6), wherein the process further comprises the application of the outermost shielding layer surrounding the electrical insulation layer (3, 7) at the end portions (11, 12).

12. A flexible vulcanized joint **characterized in that** the flexible vulcanized joint is prepared by any one of claims 1 to 11.

13. The flexible vulcanized joint according to claim 12, **characterized in that** the total concentration of α-methyl styrene in the flexible vulcanized joint measured in wt.-% is lower compared to the total concentration of α-methyl styrene in the flexible vulcanized joint measured in wt.-% when the step of applying vacuum is not performed.

14. A joined electric high voltage power cable comprising the flexible vulcanized joint according to claim 12 or claim 13.
